# EUROPÄISCHE PATENTSCHRIFT

(11) **EP 4 448 350 B1**
(45) Veröffentlichungstag und Bekanntmachung des Hinweises auf die Patenterteilung: **04.03.2026**
(21) Anmeldenummer: 22830165.1
(22) Anmeldetag: 02.12.2022
(51) Int. Cl.: B60T 7/04, B60T 8/32, B60T 8/40

(54) **BREMSVERFAHREN MIT VERKÜRZTEM PEDALWEG, BREMSSYSTEM UND KRAFTFAHRZEUG**
BRAKING METHOD WITH SHORT PEDAL TRAVEL, BRAKING SYSTEM AND MOTOR VEHICLE
PROCEDE DE FREINAGE A COURT COURT PEDAL, SYSTEME DE FREINAGE ET VEHICULE AUTOMOBILE

(30) Priorität: 17.12.2021 DE 102021214646
(43) Veröffentlichungstag der Anmeldung: 23.10.2024
(73) Patentinhaber: VOLKSWAGEN AKTIENGESELLSCHAFT, 38440 Wolfsburg (DE)
(72) Erfinder: SCHMALBRUCH, Michael, 38302 Wolfenbüttel (DE); SCHINELLER, Leo, 38553 Wasbüttel (DE)
(86) Internationale Anmeldenummer: PCT/EP2022/084200
(87) Internationale Veröffentlichungsnummer: WO 2023/110453

(56) Entgegenhaltungen:
- EP-A1- 0 895 913
- DE-A1- 102013 203 589
- US-A- 6 142 581
- US-A1- 2013 020 858

## Beschreibung

Die vorliegende Erfindung betrifft ein Verfahren zum Betreiben eines Bremssystems eines Kraftfahrzeugs zum Bremsen eines Rads des Kraftfahrzeugs. Ferner betrifft die Erfindung ein Bremssystem für ein Kraftfahrzeug sowie ein Kraftfahrzeug mit einem gattungsgemäßen Bremssystem.

Die Auslegung von Bremssystemen für Kraftfahrzeuge, wie beispielsweise Personenkraftfahrzeuge oder Lastkraftfahrzeuge, hängt von einer Vielzahl unterschiedlicher Randbedingungen ab, wie beispielsweise ein für Komponenten des Bremssystems verfügbarer Bauraum, einem vorgegebenen Maximalgewicht des Bremssystems, Herstellungskosten, Montierbarkeit sowie Demontierbarkeit, erzeugbares Bremsmoment oder dergleichen. Zudem sind gesetzliche Anforderungen für die Zulassung von Bremssystemen zu erfüllen.

Gemäß einer gesetzlichen Anforderung ist beispielsweise sicherzustellen, dass bei einem Ausfall eines Bremskraftverstärkers eine Betätigungskraft an einem Bremspedal der Bremsvorrichtung zum Erzeugen eines vorgegebenen Bremsmoments einen vorgegebenen Maximalwert nicht übersteigt. Gemäß einer gesetzlichen Vorgabe ist bei einer Betätigungskraft von 500 N ist eine Verzögerung von mindestens 2,44 m/s² zu gewährleisten. Diese Anforderung ist durch eine entsprechende Auslegung der hydraulischen Komponenten des Bremssystems erfüllbar, welche wiederum negative Auswirkungen auf andere Aspekte des Bremssystems, wie beispielsweise ein verändertes Betätigungsgefühl beim Betätigen des Bremspedals, haben kann.

Bei mechanisch gekoppelten Bremssystemen ist das Bremspedal mit einer Bremsgebervorrichtung, wie beispielsweise einer Bremsflüssigkeitsgebervorrichtung, mechanisch gekoppelt, sodass ein fester Zusammenhang zwischen einer Pedalstellung des Bremspedals und einem Bremsdruck in Radbremsen des Bremssystems besteht. Etwaige weitere Einflussfaktoren, wie beispielsweise ein Verschleiß oder eine Temperatur von Komponenten des Bremssystems sowie auf das Bremssystem wirkende Fliehkräfte oder dergleichen, sind bei dieser Betrachtung zunächst vernachlässigbar, werden aber sinnvollerweise beim Betreiben des Bremssystems mitberücksichtigt. Der Zusammenhang zwischen der Pedalstellung und dem Bremsdruck wird auch als Druck-Volumen-Kennung des Bremssystems bezeichnet und ist beispielsweise in einem Druck-Volumen-Kennfeld grafisch darstellbar.

Insbesondere bei Bremssystemen für Kraftfahrzeuge mit einem verhältnismäßig hohen Fahrzeuggewicht können nachteilige Effekte infolge der Berücksichtigung der Randbedingungen, wie beispielsweise der gesetzlichen Vorgaben, bei der Auslegung des Bremssystems auftreten. So kommt es beispielsweise verstärkt vor, dass aufgrund der gewählten Pedalübersetzung, der Größe der Bremsflüssigkeitsgebervorrichtung sowie der Dimensionen der Radbremse die Druck-Volumen-Kennung einen verhältnismäßig flachen Verlauf aufweist. Dies äußert sich im Betrieb des Bremssystems in einem vergrößerten Pedalweg zum Erzielen eines vorgegebenen Bremsmoments. Dieser Effekt wird auch als *"langes Pedal"* bezeichnet, ist vom Fahrer des Kraftfahrzeugs oftmals deutlich wahrnehmbar und weist grundsätzlich eine geringe Akzeptanz bei den Fahrern auf.

Zum Vermeiden eines solchen Effekts sind bereits diverse Lösungen bekannt, welche allesamt, insbesondere aus Bauraums- und/oder Kostengründen, nicht zufriedenstellend sind. Eine Möglichkeit der Vermeidung dieses Effekts ist die Verwendung eines entkoppelten Bremssystems. Bei einem entkoppelten Bremssystem ist ein Übersetzungsverhältnis zwischen der Pedalstellung und der bewirkten Bremskraft nahezu frei einstellbar, da eine mechanische Übertragung der Bremsanforderung nur unterstützend bzw. als Rückfallsystem bei einem Ausfall der Bordelektronik erfolgt. Die über die Pedalstellung des Bremspedals aufnehmbare Bremsanforderung ist beispielsweise über eine elektrische Leitung oder per Funk an eine Steuerungsvorrichtung oder direkt an einen elektrischen Bremsaktuator zum Betätigen der Radbremse weiterleitbar. Eine weitere Möglichkeit zur Vermeidung dieses Effekts ist eine entsprechende neue Dimensionierung der Komponenten des Bremssystems unter Einhaltung der vorgegebenen Randbedingungen, wie beispielsweise der Einsatz größerer sowie kostenintensiverer Radbremsen.

Aus dem Dokument DE 10 2015 204 764 A1 ist ein Bremssystem bekannt, das zum Kompensieren von äußeren Störfaktoren, wie beispielsweise einer Beeinträchtigung der Druck-Volumen-Kennung durch eine Kurvenfahrt oder dergleichen, ausgebildet sind. Mittels einer Steuerungsvorrichtung sind diese Beeinträchtigungen ermittelbar und durch entsprechendes Eingreifen in die Steuerung hydraulischer Komponenten des Kraftfahrzeugs ausgleichbar. Die Dokumente US 6 142 581 A1, DE 10 2013 203 589 A1, US 2013 / 020 858 A1 und EP 0 895 913 A1 offenbaren verschiedene Bremssysteme.

Derartige bekannte Bremssysteme haben beispielsweise den Nachteil, dass die Mehrkosten durch den Einsatz größerer oder alternativer Komponenten verhältnismäßig hoch sind. Ferner sind derartige Bremssysteme vor allem bei beschränktem Bauraum sowie reduziertem Gewichtsspielraum oftmals nicht einsetzbar. Kompensierende Bremssysteme greifen nur dann in das Fahrgeschehen ein, wenn Beeinträchtigungen vorliegen, sodass der Fahrer den Eingriff durch ein verändertes Pedalgefühl, wie beispielsweise ein sich, insbesondere sprunghaft, verändernder Pedalwiderstand oder eine sich, insbesondere sprunghaft, verändernde Pedalstellung, bemerkt. Daher werden solche automatischen Eingriffe von Fahrern oftmals als störend wahrgenommen.

Es ist daher Aufgabe der vorliegenden Erfindung, die voranstehend beschriebenen Nachteile bei einem Verfahren zum Betreiben eines Bremssystems eines Kraftfahrzeugs zum Bremsen eines Rads des Kraftfahrzeugs zu beheben oder zumindest teilweise zu beheben. Insbesondere ist es Aufgabe der vorliegenden Erfindung ein Verfahren, ein Bremssystem und ein Kraftfahrzeug zu schaffen, die auf eine einfache und kostengünstige Art und Weise sowie unter Einhaltung gesetzlicher Vorgaben eine Verbesserung des Pedalgefühls bereitstellen.

Voranstehende Aufgabe wird durch die Patentansprüche gelöst. Demnach wird die Aufgabe durch ein mit den Merkmalen des nebengeordneten Anspruchs zum Betreiben eines Bremssystems eines Kraftfahrzeugs zum Bremsen eines Rads des Kraftfahrzeugs mit den Merkmalen des unabhängigen Anspruchs 1, durch ein Bremssystem mit den Merkmalen des nebengeordneten Anspruchs 78 7 sowie durch ein Kraftfahrzeug mit den Merkmalen des nebengeordneten Anspruchs 9 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Bremssystem sowie dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Verfahren zum Betreiben eines Bremssystems eines Kraftfahrzeugs zum Bremsen eines Rads des Kraftfahrzeugs gelöst. Das Verfahren weist auf:
- Erfassen einer Pedalstellung eines Bremspedals des Bremssystems mittels einer Erfassungsvorrichtung des Bremssystems, und
- Beaufschlagen einer Radbremse des Bremssystems mit einer Bremsflüssigkeit mittels einer mit dem Bremspedal mechanisch gekoppelten Bremsflüssigkeitsgebervorrichtung.

Erfindungsgemäß wird mittels einer Steuerungsvorrichtung des Bremssystems eine Zusatzbremsvorrichtung zum Bewirken eines zusätzlichen Bremsens des Rads in Abhängigkeit der erfassten Pedalstellung angesteuert, wobei als Zusatzbremsvorrichtung eine ESC-Pumpe angesteuert wird, wobei mittels der ESC-Pumpe die Radbremse mit der Bremsflüssigkeit beaufschlagt wird, wobei die Zusatzbremsvorrichtung unabhängig von der Pedalstellung betätigbar ist.

Das Verfahren wird bei einem Bremssystem durchgeführt, welches zum Bremsen eines Rads des Kraftfahrzeugs ausgebildet ist. Vorzugsweise wird ein Bremssystem verwendet, welches zum Bremsen mehrerer Räder, insbesondere sämtlicher Räder, des Kraftfahrzeugs ausgebildet ist. Es wird für die Durchführung des Verfahrens ein Bremssystem verwendet, welches neben einer fluidmechanischen Kopplung der Radbremse mit dem Bremspedal über die Bremsflüssigkeitsgebervorrichtung auch eine mechanisch vom Bremspedal entkoppelte Bremsmöglichkeit über die Zusatzbremsvorrichtung aufweist. Die Zusatzbremsvorrichtung ist unabhängig von der Pedalstellung betätigbar.

Vor einer Betätigung weist das Bremspedal eine Pedalstellung auf, die als Ausgangsstellung bezeichnet wird. Das Bremssystem ist vorzugsweise ausgebildet, das unbetätigte Bremspedal automatisch in die Ausgangsstellung zurückzustellen, beispielsweise mittels einer hierfür ausgebildeten Rückstellvorrichtung. Bei der Betätigung des Bremspedals verändert sich die Pedalstellung des Bremspedals. Die Pedalstellung wird im Rahmen der Erfindung vorzugsweise als relative Lage des betätigten Bremspedals zur Ausgangsstellung ermittelt. Diese Lage ist beispielsweise als Lagewinkel bestimmbar. Durch die mechanische Kopplung des Bremspedals mit der Bremsflüssigkeitsgebervorrichtung ist der Lagewinkel auch als translatorische Bewegung erfassbar. Das Erfassen der Pedalstellung erfolgt vorzugsweise kontinuierlich oder zumindest im Wesentlichen kontinuierlich, sodass stets die aktuelle Pedalstellung erfasst wird. Das Erfassen erfolgt mittels der Erfassungsvorrichtung, die hierfür beispielsweise einen Weggeber oder dergleichen aufweisen kann.

Durch die mechanische Kopplung des Bremspedals mit der Bremsflüssigkeitsgebervorrichtung bewirkt die Veränderung der Pedalstellung automatisch eine Lageveränderung der Bremsflüssigkeitsgebervorrichtung, sodass die Radbremse entsprechend der Lageveränderung mit der Bremsflüssigkeit beaufschlagt wird und ein entsprechendes Bremsmoment erfolgt. Ein Verhältnis zwischen der Pedalstellung und dem auf diese Weise bereitgestellten Bremsflüssigkeitsdruck ist durch die Druck-Volumen-Kennung des Bremssystems bekannt.

Die Steuerungsvorrichtung erfasst die Pedalstellung und steuert die Zusatzbremsvorrichtung derart an, dass neben dem Bremsmoment ein Zusatzbremsmoment erzeugt wird. Das bedeutet, dass für jede von der Ausgangsstellung abweichende Pedalstellung ein Gesamtbremsmoment bereitgestellt ist, welches sich aus dem Bremsmoment und dem Zusatzbremsmoment zusammensetzt und somit größer ist als das Bremsmoment. Die Steuerungsvorrichtung kann erfindungsgemäß als Teil des ESC-Systems bzw. ESC-Steuerungsvorrichtung oder als zusätzliche Steuerungsvorrichtung des Bremssystems ausgebildet sein. Die Zusatzbremsvorrichtung beaufschlagt hierbei beispielsweise die Radbremse oder eine Zusatzbremse mit zusätzlicher Bremsflüssigkeit. Aus der Perspektive des Fahrers des Kraftfahrzeugs verhält sich das Bremssystem wie ein Bremssystem mit einer steileren Druck-Volumen-Kennung. Im Rahmen der Erfindung wird dies daher als scheinbare Druck-Volumen-Kennung bezeichnet. Mit anderen Worten wird auf diese Weise erreicht, dass ein Abbremsen des Kraftfahrzeugs gegenüber herkömmlichen Verfahren bei gleicher Pedalstellung stärker ausfällt. Vorzugsweise wird das Zusatzbremsmoment in Abhängigkeit eines Verschleißzustands des Bremssystems, wie beispielsweise von Bremsklötzen, bereitgestellt, um den mit dem Verschleiß einhergehenden Verlust der Bremskraft zusätzlich zu kompensieren. Weiter bevorzugt wird das Zusatzbremsmoment in Abhängigkeit eines weiteren vordefinierbaren Parameters, wie beispielsweise ein zu simulierender Fahrzeugtyp, wie beispielsweise ein kleineres oder größeres Fahrzeugmodell, ein Fahrmodus des Kraftfahrzeugs, wie beispielsweise ein Sportmodus mit einer besonders steilen scheinbaren Druck-Volumen-Kennung bzw. einem relativ hohen Zusatzbremsmoment oder ein Komfortmodus mit einer weniger steilen scheinbaren Druck-Volumen-Kennung bzw. einem relativ niedrigen Zusatzbremsmoment, angesteuert.

Gemäß der Erfindung wird als Zusatzbremsvorrichtung eine ESC-Pumpe angesteuert, wobei mittels der ESC-Pumpe die Radbremse mit der Bremsflüssigkeit beaufschlagt wird. ESC-Systeme sind inzwischen weit verbreitet und ermöglichen ein automatisches Eingreifen in einen Bremsvorgang, wie beispielsweise ein selektives unterschiedliches Bremsen einzelner Räder, um einen Kontrollverlust über das Kraftfahrzeug, wie beispielsweise ein Ausbrechen, Schleudern oder dergleichen, zu vermeiden. Ein Bremseingriff durch ein herkömmliches ESC-System erfolgt daher als reine situativ errechnete Bremskorrektur unter Berücksichtigung einer Vielzahl von live erfassten Parametern des Kraftfahrzeugs. Im Rahmen des erfindungsgemäßen Verfahrens erfährt das ESC-System eine hiervon deutlich abweichende Ansteuerung. Die ESC-Pumpe wird zum Bereitstellen eines Zusatzdrucks zum Beaufschlagen der Radbremse mit der Bremsflüssigkeit mittels der Steuerungsvorrichtung derart angesteuert, dass die scheinbare Druck-Volumen-Kennung des Kraftfahrzeugs einen steileren Verlauf aufweist. Das Erfassen weiterer fahrzeugstabilitätsrelevanter Parameter ist für diesen Eingriff nicht erforderlich. Vorzugsweise wird die ESC-Pumpe auch bei deaktivierter ESC-Funktion des Kraftfahrzeugs angesteuert, sodass die Bereitstellung des Zusatzbremsmoments sichergestellt ist. Dies hat den Vorteil, dass mit einfachen Mitteln sowie auf eine kostengünstige Art und Weise bereits vorhandene Vorrichtungen des Kraftfahrzeugs zum Erzeugen des Zusatzbremsmoments verwendet werden, sodass hierfür keine zusätzlichen Komponenten bereitgestellt werden müssen.

Ein erfindungsgemäßes Verfahren hat gegenüber herkömmlichen Verfahren den Vorteil, dass mit einfachen Mitteln sowie auf eine kostengünstige Art und Weise sowie unter Einhaltung gesetzlicher Vorgaben ein Bremsgefühl verbessert ist. Durch die Bereitstellung des Zusatzbremsmoments reicht bereits eine kleinere Veränderung der Pedalstellung aus, um ein Wunschbremsmoment zu bewirken. Das Problem eines *"langen Pedals"* ist somit, insbesondere bei verhältnismäßig schweren Kraftfahrzeugen, auf vorteilhafte Weise behoben. Ferner ist durch eine steilere Druck-Volumen-Kennung eine Kontrolle eines Bremsvorgangs durch den Fahrer verbessert und somit eine allgemeine Sicherheit des Kraftfahrzeugs erhöht.

Es ist erfindungsgemäß bevorzugt, dass als Zusatzbremsvorrichtung ein Generator zum Bremsen des Rads angesteuert wird. Mittels des Generators ist dabei elektrischer Strom generierbar. Dieser Vorgang wird auch als *"Rekuperieren"* bezeichnet und kommt beispielsweise bei Hybridfahrzeugen sowie bei Elektrofahrzeugen zur Reduzierung eines Stromverbrauchs zum Einsatz. Dies hat den Vorteil, dass mit einfachen Mitteln sowie auf eine kostengünstige Art und Weise bereits vorhandene Vorrichtungen des Kraftfahrzeugs zum Erzeugen des Zusatzbremsmoments verwendet werden, sodass hierfür keine zusätzlichen Komponenten bereitgestellt werden müssen.

Weiter bevorzugt wird als Bremsflüssigkeitsgebervorrichtung eine Bremsflüssigkeitsgebervorrichtung verwendet, die einen mit dem Bremspedal mechanisch gekoppelten Tandemhauptzylinder aufweist. Der Tandemhauptzylinder wird auch als *"THZ"* bezeichnet und ist zum gleichzeitigen Betreiben von zwei redundanten Bremskreisen des Bremssystems ausgebildet. Bei einer defekten Bremsleitung eines der Bremskreise ist ein Betrieb des anderen Bremskreises weiterhin gewährleistbar. Dies hat den Vorteil, dass das Bremsmoment zuverlässig, mit einfachen Mitteln sowie auf eine kostengünstige Art und Weise bereitgestellt wird.

In einer besonders bevorzugten Ausgestaltung der Erfindung kann bei einem Verfahren vorgesehen sein, dass mittels der Steuerungsvorrichtung ein durch die Zusatzbremsvorrichtung auf das Bremspedal bewirkte Zusatzkraft durch Ansteuern eines Bremskraftverstärkers zum Bereitstellen einer Kompensationskraft vollständig oder teilweise kompensiert wird. In Folge der Bereitstellung des Zusatzbremsmoments, wie beispielsweise bei der Verwendung der ESC-Pumpe, einer zusätzlichen Bremsflüssigkeitspumpe oder dergleichen, kann an der Bremsflüssigkeitsgebervorrichtung, wie beispielsweise einem Tandemhauptzylinder, insbesondere an einer Manschette des Tandemhauptzylinders, aufgrund einer Saugkraft der Pumpe, derart wirken, dass eine dem Bremspedal entgegensetzbare Gegenkraft reduziert ist. Dies kann sich durch ein spürbares Auslenken des Bremspedals von der Ausgangslage weg für den Fahrer bemerkbar machen. Durch ein gezieltes Ansteuern des Bremskraftverstärkers, welcher vorzugsweise als elektromechanischer Bremskraftverstärker ausgebildet ist, wird vorzugsweise die vom Bremskraftverstärker bereitgestellte Unterstützungskraft derart reduziert, dass dieser Effekt vollständig oder zumindest teilweise aufgehoben wird. Die Ansteuerung des Bremskraftverstärkers erfolgt mittels der Steuerungsvorrichtung, die vorzugsweise als ESC-Steuerungsvorrichtung ausgebildet ist. Vorzugsweise erfolgt die Ansteuerung über eine 2-Box Schnittstelle des Bremssystems, über welche der Bremskraftverstärker und die ESC-Pumpe mit der Steuerungsvorrichtung elektrisch gekoppelt sind. Die 2-Box Schnittstelle wird üblicherweise beim Brakeblending zur Pedalkraftkompensation verwendet. Dies hat den Vorteil, dass mit einfachen Mitteln sowie auf eine kostengünstige Art und Weise ein Bedienkomfort des Bremssystems weiter verbessert ist. Ferner ist durch das Kompensieren des weiteren Auslenkens des Bremspedals eine Sicherheit des Bremssystems weiter verbessert, da der Fahrer hierdurch eine bessere Kontrolle über den Bremsvorgang erhält.

Vorzugsweise wird mittels der Erfassungsvorrichtung eine Stellungsveränderungsrate der Pedalstellung erfasst, wobei die Steuerungsvorrichtung auf Basis der erfassten Pedalstellung und der erfassten Stellungsveränderungsrate eine Zielpedalstellung ermittelt und die Zusatzbremsvorrichtung in Abhängigkeit der erfassten Zielpedalstellung ansteuert. Mittels eines geeigneten Algorithmus lässt sich die Zielpedalstellung abschätzen. Bei beispielsweise einer verhältnismäßig hohen Stellungsveränderungsrate, welche beispielsweise beim Einleiten einer Notvollbremsung auftritt, ist ausgehend von einer ersten Pedalstellung bereits erkennbar, dass noch mindestens eine weitere zweite Pedalstellung mit einer größeren Abweichung von der Ausgangslage erreicht wird. Durch das Prädizieren der Zielpedalstellung sind Trägheitseffekte im Bremssystem, beispielsweise bei der ESC-Pumpe oder dem Bremskraftverstärker, zumindest teilweise kompensierbar, sodass eine Bremsantwort des Bremssystems auf einen Bremsbefehl des Fahrers spürbar noch direkter auf seinen Bremsbefehlt erfolgt. Dies hat den Vorteil, dass mit einfachen Mitteln sowie auf eine kostengünstige Art und Weise ein Bedienkomfort des Bremssystems weiter verbessert ist. Ferner ist durch das direktere Reagieren des Bremssystems auf die Betätigung des Bremspedals eine Sicherheit des Bremssystems weiter verbessert, da der Fahrer hierdurch eine bessere Kontrolle über den Bremsvorgang erhält.

Gemäß einer bevorzugten Ausführungsform der Erfindung wird die Zusatzbremsvorrichtung in Abhängigkeit einer auf einen Fahrer des Kraftfahrzeugs individualisierte Konfigurationsvorgabe angesteuert. Die individualisierte Konfigurationsvorgabe kann beispielsweise in einem individuellen Fahrerprofil hinterlegt werden, welches durch eine manuelle Eingabe vom Fahrer direkt parametrisierbar und/oder aufgrund eines beobachteten Fahrverhaltens des Fahrers automatisch parametrisierbar ist. Alternativ oder zusätzlich kann die individualisierte Konfigurationsvorgabe in Abhängigkeit eines gewählten Fahrmodus des Kraftfahrzeugs, wie beispielsweise ein Sportmodus, ein Komfortmodus, ein Sparmodus oder dergleichen, bereitgestellt bzw. beeinflusst werden. Die scheinbare Druck-Volumen-Kennung des Bremssystems ist somit gezielt vom Fahrer beeinflussbar, sodass ein sportlicher oder erfahrener Fahrer beispielsweise eine steilere scheinbare Druck-Volumen-Kennung mit einem verhältnismäßig kurzen Pedalweg und ein gemütlicher bzw. unsicherer Fahrer eine flachere scheinbare Druck-Volumen-Kennung mit einem verhältnismäßig langen Pedalweg auswählen kann. Dies hat den Vorteil, dass mit einfachen Mitteln sowie auf eine kostengünstige Art und Weise ein Bedienkomfort des Bremssystems weiter verbessert ist. Ferner ist durch das individualisierte Konfigurieren des Bremssystems eine Sicherheit des Bremssystems weiter verbessert, da der Fahrer hierdurch eine auf seine Bedürfnisse zugeschnittene und somit bessere Kontrolle über den Bremsvorgang erhält.

Gemäß einem zweiten Aspekt der Erfindung wird die Aufgabe durch ein Bremssystem für ein Kraftfahrzeug gelöst. Das Bremssystem weist eine Radbremse zum Bremsen eines Rads des Kraftfahrzeugs, ein zwischen mehreren Pedalstellungen verstellbares Bremspedal zur Eingabe einer Bremsvorgabe durch einen Fahrer des Kraftfahrzeugs, eine Erfassungsvorrichtung zum Erfassen der Pedalstellung, eine mit dem Bremspedal mechanisch gekoppelte Bremsflüssigkeitsgebervorrichtung zum Beaufschlagen der Radbremse mit einer Bremsflüssigkeit, eine Zusatzbremsvorrichtung zum Bewirken eines zusätzlichen Bremsens des Rads und eine Steuerungsvorrichtung zum Steuern der Zusatzbremsvorrichtung auf.

Erfindungsgemäß ist die Steuerungsvorrichtung zum Steuern der Zusatzbremsvorrichtung in Abhängigkeit der erfassten Pedalstellung ausgebildet, wobei die Zusatzbremsvorrichtung eine ESC-Pumpe aufweist, mittels welcher die Radbremse mit der Bremsflüssigkeit beaufschlagbar ist, wobei die Zusatzbremsvorrichtung unabhängig von der Pedalstellung betätigbar ist.

Die einzelnen Komponenten des Bremssystems sind grundsätzlich aus dem Stand der Technik bekannt. Vorzugsweise wiest das Bremssystem mehrere Radbremsen auf. Der wesentliche Unterschied besteht in der Konfiguration der Komponenten, durch welche erfindungsgemäß eine komplett neue Arbeitsweise des Bremssystems bereitgestellt ist. Das erfindungsgemäße Bremssystem weist eine derartige mechanische Kopplung des Gaspedals mit der Radbremse auf, dass Randbedingungen, insbesondere gesetzliche Vorgaben, erfüllt sind. Die Steuerungsvorrichtung ist ausgebildet, das hieraus resultierende *"lange Pedal"* durch das entsprechende Ansteuern der Zusatzbremsvorrichtung derart zu kompensieren, dass der Pedalweg zum Erzielen desselben Bremsmoments verkürzt ist. Die scheinbare Druck-Volumen Kennung weist somit einen steileren Verlauf auf als die Druck-Volumen Kennung eines herkömmlichen Bremssystems.

Bei dem erfindungsgemäßen Bremssystem ergeben sich sämtliche Vorteile, die bereits zu einem Verfahren zum Betreiben eines Bremssystems eines Kraftfahrzeugs zum Bremsen eines Rads des Kraftfahrzeugs gemäß dem ersten Aspekt der Erfindung beschrieben worden sind. Demnach hat das erfindungsgemäße Bremssystem gegenüber herkömmlichen Bremssystemen den Vorteil, dass mit einfachen Mitteln sowie auf eine kostengünstige Art und Weise sowie unter Einhaltung gesetzlicher Vorgaben ein Bremsgefühl verbesserbar ist. Durch die Einrichtung der Steuerungsvorrichtung zum Steuern der Zusatzbremsvorrichtung in Abhängigkeit der erfassten Pedalstellung zur Bereitstellung des Zusatzbremsmoments ist gewährleistet, dass bereits eine kleinere Veränderung der Pedalstellung ausreicht, um ein Wunschbremsmoment zu bewirken. Das Problem eines *"langen Pedals"* ist somit, insbesondere bei verhältnismäßig schweren Kraftfahrzeugen, auf vorteilhafte Weise behoben. Ferner ist durch eine steilere Druck-Volumen-Kennung eine Kontrolle eines Bremsvorgangs durch den Fahrer verbessert und somit eine allgemeine Sicherheit des Kraftfahrzeugs erhöht.

Es ist erfindungsgemäß bevorzugt, dass das Bremssystem zur Durchführung eines erfindungsgemäßen Verfahrens ausgebildet ist. Demnach ist es bevorzugt, dass das Bremssystem eine oder mehrere der in Bezug auf das erfindungsgemäße Verfahren beschriebenen Komponenten eines Bremssystems, wie beispielsweise ein ESC-System mit einer ESC-Pumpe, einen Generator zum Rekuperieren, einen Tandemhauptzylinder, einen Bremskraftverstärker, wie beispielsweise einen elektromechanischen Bremskraftverstärker, oder dergleichen, aufweist. Dies hat den Vorteil, dass mit einfachen Mitteln sowie auf eine kostengünstige Art und Weise ein Bedienkomfort des Bremssystems verbesserbar ist. Ferner ist hierdurch eine Sicherheit des Bremssystems verbesserbar.

Gemäß einem dritten Aspekt der Erfindung wird die Aufgabe durch ein Kraftfahrzeug gelöst. Das Kraftfahrzeug weist einen Antriebsstrang zum Antreiben des Kraftfahrzeugs und ein Lenksystem zum Lenken des Kraftfahrzeugs auf. Erfindungsgemäß weist das Kraftfahrzeug ein erfindungsgemäßes Bremssystem auf.

Der Antriebsstrang ist vorzugsweise als verbrennungsmotorischer Antriebsstrang mit einem Verbrennungsmotor, als hybrider Antriebsstrang mit einem Verbrennungsmotor und einem Elektromotor oder als elektrischer Antriebsstrang mit einem Elektromotor zum Antreiben des Kraftfahrzeugs ausgebildet. Das Lenksystem ist vorzugsweise gemäß einem aus dem Stand der Technik bekannten Lenksystem ausgebildet. Die Steuerungsvorrichtung des Bremssystems ist zum Ansteuern der Zusatzbremsvorrichtung zum Bewirken eines zusätzlichen Bremsens des Rads in Abhängigkeit einer erfassten Pedalstellung des Bremspedals ausgebildet. Vorzugsweise ist die Erfassungsvorrichtung des Bremssystems ausgebildet, einen Lenkwinkel des Lenksystems zu erfassen, wobei die Steuerungsvorrichtung vorzugsweise ausgebildet ist, die Zusatzbremsvorrichtung zusätzlich in Abhängigkeit des erfassten Lenkwinkels anzusteuern.

Bei dem erfindungsgemäßen Kraftfahrzeug ergeben sich sämtliche Vorteile, die bereits zu einem Verfahren zum Betreiben eines Bremssystems eines Kraftfahrzeugs zum Bremsen eines Rads des Kraftfahrzeugs gemäß dem ersten Aspekt der Erfindung sowie zu einem Bremssystem für ein Kraftfahrzeug gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise sowie unter Einhaltung gesetzlicher Vorgaben ein Bremsgefühl verbesserbar ist. Durch die Einrichtung der Steuerungsvorrichtung zum Steuern der Zusatzbremsvorrichtung in Abhängigkeit der erfassten Pedalstellung zur Bereitstellung des Zusatzbremsmoments ist gewährleistet, dass bereits eine kleinere Veränderung der Pedalstellung ausreicht, um ein Wunschbremsmoment zu bewirken. Das Problem eines *"langen Pedals"* ist somit, insbesondere bei verhältnismäßig schweren Kraftfahrzeugen, auf vorteilhafte Weise behoben. Ferner ist durch eine steilere Druck-Volumen-Kennung eine Kontrolle eines Bremsvorgangs durch den Fahrer verbessert und somit eine allgemeine Sicherheit des Kraftfahrzeugs erhöht.

Ein erfindungsgemäßes Verfahren, ein erfindungsgemäßes Bremssystem sowie ein erfindungsgemäßes Kraftfahrzeug werden nachfolgend anhand von Zeichnungen näher erläutert. Es zeigen jeweils schematisch:
- Figur 1: in einer Prinzipskizze ein herkömmliches Bremssystem nach dem Stand der Technik,
- Figur 2: ein Pedalweg-Bremsverzögerung-Diagramm für verschiedene Kraftfahrzeuge,
- Figur 3: in einer Prinzipskizze ein Bremssystem gemäß einer bevorzugten ersten Ausführungsform der Erfindung,
- Figur 4: in einer Prinzipskizze ein Bremssystem gemäß einer bevorzugten zweiten Ausführungsform der Erfindung,
- Figur 5: ein Pedalweg-Bremsdruck-Diagramm für ein Kraftfahrzeug für die Durchführung eines herkömmlichen Verfahrens im Vergleich zu einem erfindungsgemäßen Verfahren,
- Figur 6: in einer Seitenansicht eine bevorzugte Ausführungsform eines erfindungsgemäßen Kraftfahrzeugs, und
- Figur 7: in einem Ablaufdiagramm eine bevorzugte Ausführungsform eines erfindungsgemäßen Verfahrens.

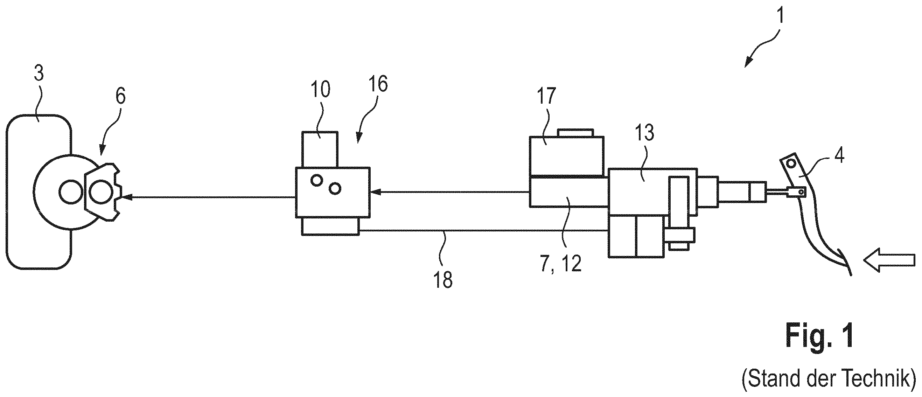

Elemente mit gleicher Funktion und Wirkungsweise sind in den Figuren 1 bis 7 jeweils mit denselben Bezugszeichen versehen.

In Fig. 1 ist ein herkömmliches Bremssystem 1 nach dem Stand der Technik schematisch in einer Prinzipskizze abgebildet. Zur Aufnahme einer Bremsvorgabe eines Fahrers weist das Bremssystem 1 ein Bremspedal 4 auf, welches über einen elektromechanischen Bremskraftverstärker 13 mit einer als Tandemhauptzylinder 12 ausgebildeten Bremsflüssigkeitsgebervorrichtung 7 mechanisch gekoppelt ist. Mittels des Tandemhauptzylinders 12 ist eine Radbremse 6 mit einer Bremsflüssigkeit beaufschlagbar. In einem Bremsflüssigkeitstank 17 ist Bremsflüssigkeit, insbesondere zum Ausgleichen von Temperatureffekten, angeordnet. Über eine nicht dargestellte Schnüffelbohrung ist Bremsflüssigkeit in Abhängigkeit der vorherrschenden Druckverhältnisse vom Bremsflüssigkeitstank 17 in den Tandemhauptzylinder 12 oder vom Tandemhauptzylinder 12 in den Bremsflüssigkeitstank 17 einleitbar. Zum automatischen Eingreifen in einen Bremsdruck in Abhängigkeit von Fahrzeugbeschleunigungen zur Verbesserung einer Straßenlage, weist das Bremssystem 1 ein ESC-System 16 mit einer ESC-Pumpe 10 auf. Das ESC-System 16 ist über eine 2-Box Schnittstelle 18 mit dem Bremskraftverstärker 13 elektrisch gekoppelt.

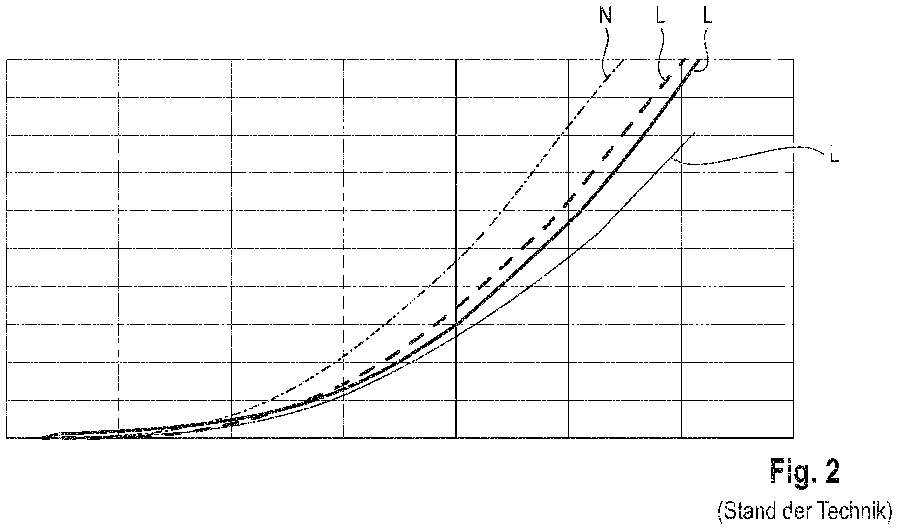

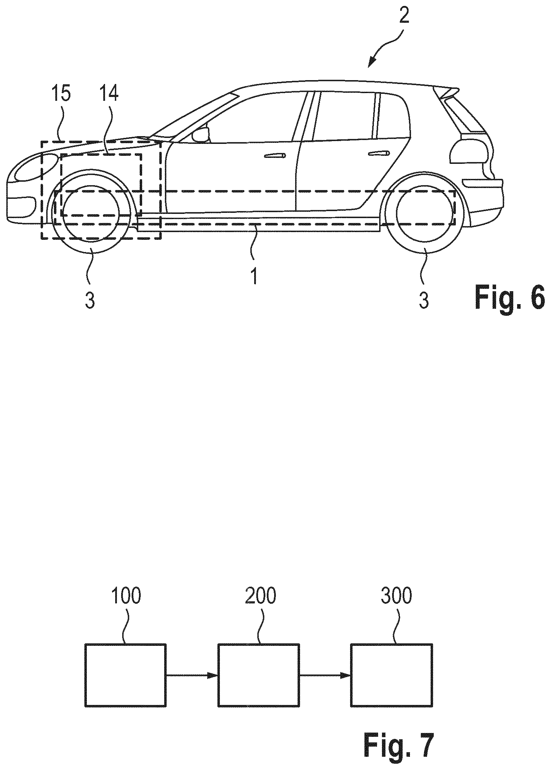

Fig. 2 zeigt schematisch ein Pedalweg-Bremsverzögerung-Diagramm für verschiedene Kraftfahrzeuge 2 (vgl. Fig. 6). Der Pedalweg ist auf der Abszisse und die Bremsverzögerung auf der Ordinate dargestellt. In dem Diagramm sind Kennungskurven für vier Kraftfahrzeuge 2 dargestellt. Eine in dieser Ansicht obere Kennungskurve ist die Kennungskurve eines verhältnismäßig leichten Kraftfahrzeugs 2 und wird als *"normales Pedal"* N bezeichnet, da die Bremsverzögerung zum Pedalweg in einem bevorzugten Verhältnis steht, welches eine besonders hohe Akzeptanz bei Fahrern hat. Eine in dieser Ansicht untere Kennungskurve ist die Kennungskurve eines verhältnismäßig schweren Kraftfahrzeugs 2 und wird als *"langes Pedal"* L bezeichnet, da zum Erreichen derselben Bremsverzögerung wie beim leichten Kraftfahrzeug 2 ein deutlich längerer Pedalweg erforderlich ist. Ein derartiges Verhältnis der Bremsverzögerung zum Pedalweg hat bei Fahrern eine wesentlich geringere Akzeptanz. Die mittleren Kennungskurven sind die Kennungskurven übriger Kraftfahrzeuge 2, welche von dem *"normalen Pedal"* N abweichen und somit ebenfalls als *"langes Pedal"* L bezeichnet werden.

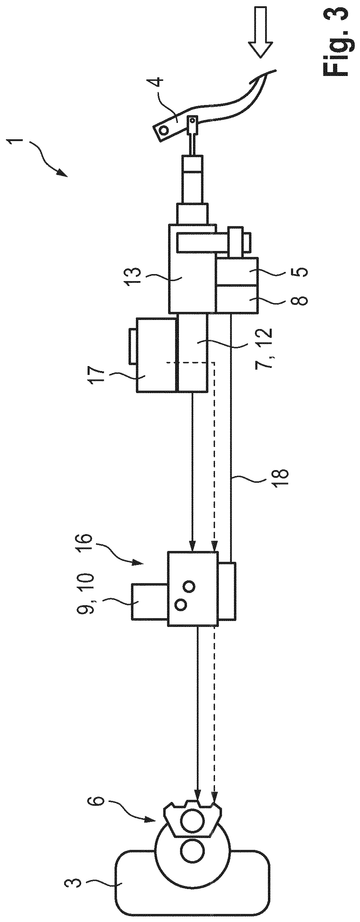

In Fig. 3 ist ein Bremssystem 1 gemäß einer bevorzugten ersten Ausführungsform der Erfindung schematisch in einer Prinzipskizze dargestellt. Zur Aufnahme einer Bremsvorgabe eines Fahrers weist das Bremssystem 1 ein Bremspedal 4 auf, welches über einen elektromechanischen Bremskraftverstärker 13 mit einer als Tandemhauptzylinder 12 ausgebildeten Bremsflüssigkeitsgebervorrichtung 7 mechanisch gekoppelt ist. Mittels des Tandemhauptzylinders 12 ist eine Radbremse 6 zum Bremsen eines Rads 3 mit einer Bremsflüssigkeit beaufschlagbar. In einem Bremsflüssigkeitstank 17 ist Bremsflüssigkeit, insbesondere zum Ausgleichen von Temperatureffekten, angeordnet. Über eine nicht dargestellte Schnüffelbohrung ist Bremsflüssigkeit in Abhängigkeit der vorherrschenden Druckverhältnisse vom Bremsflüssigkeitstank 17 in den Tandemhauptzylinder 12 oder vom Tandemhauptzylinder 12 in den Bremsflüssigkeitstank 17 einleitbar. Zum automatischen Eingreifen in einen Bremsdruck in Abhängigkeit von Fahrzeugbeschleunigungen zur Verbesserung einer Straßenlage, weist das Bremssystem 1 ein ESC-System 16 mit einer ESC-Pumpe 10 auf. Das ESC-System 16 ist über eine 2-Box Schnittstelle 18 mit dem Bremskraftverstärker 13 elektrisch gekoppelt.

Ferner weist das Bremssystem 1 am Bremskraftverstärker 13 eine Erfassungsvorrichtung 5 zum Erfassen einer Pedalstellung des Bremspedals 4 auf. Die Erfassungsvorrichtung kann alternativ auch im Bereich des Bremspedals 4 oder des Tandemhauptzylinders 12 angeordnet sein. Eine Steuerungsvorrichtung 8 des Bremssystems 1 ist mit der Erfassungsvorrichtung 5 zum Ermitteln der Pedalstellung gekoppelt. Die ESC-Pumpe 10 ist zudem als Zusatzbremsvorrichtung 9 ausgebildet und ist mittels der Steuerungsvorrichtung 8 in Abhängigkeit der ermittelten Pedalstellung steuerbar. Somit ist zusätzliche Bremsflüssigkeit mittels der ESC-Pumpe 10 aus dem Bremsflüssigkeitstank 17 zur Radbremse 6 leitbar, sodass der Fahrer zum Erzielen einer vorgegebenen Bremsverzögerung einen kürzeren Pedalweg benötigt als bei einem herkömmlichen Bremssystem 1 gemäß Fig. 1.

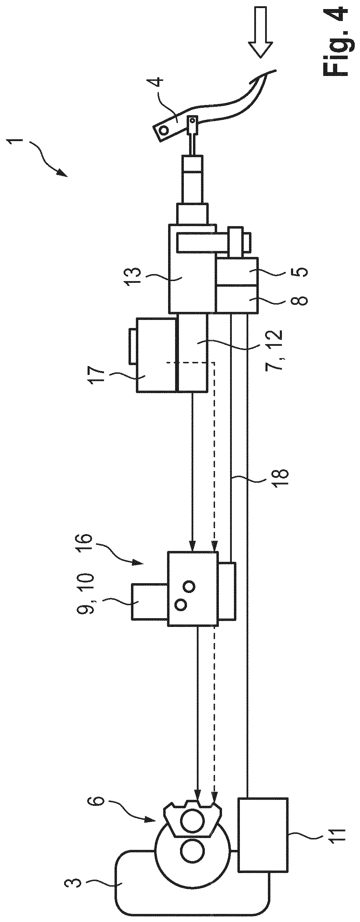

Fig. 4 zeigt ein Bremssystem 1 gemäß einer bevorzugten zweiten Ausführungsform der Erfindung schematisch in einer Prinzipskizze. Das Bremssystem 1 entspricht dem Bremssystem 1 gemäß der bevorzugten ersten Ausführungsform der Erfindung und weist zusätzlich zur Energierückgewinnung einen am Rad 3 angeordneten Generator 11 auf. Die Steuerungsvorrichtung 8 ist zudem ausgebildet, den Generator 11 in Abhängigkeit der Pedalstellung derart anzusteuern, dass der Pedalweg zum Erzielen einer vorgegebenen Bremsverzögerung verkürzt ist.

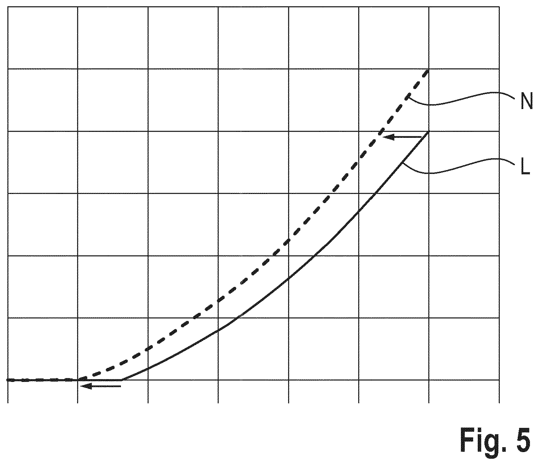

In Fig. 5 ist ein Pedalweg-Bremsdruck Diagramm für ein Kraftfahrzeug 2 für die Durchführung eines herkömmlichen Verfahrens im Vergleich zu einem erfindungsgemäßen Verfahren dargestellt. Die in dieser Ansicht untere Kennkurve steht für ein herkömmliches Kraftfahrzeug 2, welches ein *"langes Pedal"* L aufweist. Die in dieser Ansicht obere Kennkurve steht für ein erfindungsgemäßes Kraftfahrzeug 2, bei welchem ein Bremsmoment durch Zusammenspiel der Steuerungsvorrichtung 8 mit der Zusatzbremsvorrichtung 9 bei gleicher Pedalstellung erhöht ist. Das erfindungsgemäße Kraftfahrzeug 2 weist somit ein *"normales Pedal"* N auf.

Fig. 6 zeigt eine bevorzugte Ausführungsform eines erfindungsgemäßen Kraftfahrzeugs 2 schematisch in einer Seitenansicht. Das Kraftfahrzeug 2 weist einen Antriebsstrang 14 zum Antreiben von Rädern 3 des Kraftfahrzeugs 2, ein Lenksystem 15 zum Lenken der vorderen Räder 3 sowie ein erfindungsgemäßes Bremssystem 1 zum Bremsen vorzugsweise sämtlicher Räder 3 auf.

In Fig. 7 ist eine bevorzugte Ausführungsform eines erfindungsgemäßen Verfahrens schematisch in einem Ablaufdiagramm dargestellt. Gemäß einer ersten Verfahrensaktion 100 wird mittels der Erfassungsvorrichtung 5 des Bremssystems 1 die Pedalstellung des Bremspedals 4 des Bremssystems 1 erfasst. Das Erfassen erfolgt vorzugsweise kontinuierlich, sodass die Pedalstellung des Bremspedals 4 in Echtzeit erfasst wird. Gemäß einer zweiten Verfahrensaktion 200 wird mittels der mit dem Bremspedal 4 und dem elektromechanischen Bremskraftverstärker 13 mechanisch gekoppelten Bremsflüssigkeitsgebervorrichtung 7 die Radbremse 6 entsprechend der Pedalstellung mit Bremsflüssigkeit beaufschlagt. Gemäß einer dritten Verfahrensaktion 300 wird die als ESC-Pumpe 10 ausgebildete Zusatzbremsvorrichtung 9 mittels der Steuerungsvorrichtung 8 in Abhängigkeit der erfassten Pedalstellung derart angesteuert, dass zusätzliche Bremsflüssigkeit aus dem Bremsflüssigkeitstank 17 zur Radbremse 6 geleitet und somit das Bremsmoment der Radbremse 6 erhöht wird. Hierdurch wird der Bremskomfort für den Fahrer verbessert, da durch das erfindungsgemäße Verfahren der Pedalweg zum Erzielen eines vom Fahrer vorgegebenen Bremsmoments verkürzt wird. Vorzugsweise wird ein hierdurch in Richtung des Bremspedals 4 wirkendes Kraftfeedback des Bremssystems 1 durch eine entsprechende Ansteuerung des Bremskraftverstärkers 13 mittels der Steuerungsvorrichtung 8 vollständig oder teilweise kompensiert, um den Bremskomfort weiter zu erhöhen.

### Bezugszeichenliste

- 1: Bremssystem
- 2: Kraftfahrzeug
- 3: Rad
- 4: Bremspedal
- 5: Erfassungsvorrichtung
- 6: Radbremse
- 7: Bremsflüssigkeitsgebervorrichtung
- 8: Steuerungsvorrichtung
- 9: Zusatzbremsvorrichtung
- 10: ESC-Pumpe
- 11: Generator
- 12: Tandemhauptzylinder
- 13: Bremskraftverstärker
- 14: Antriebsstrang
- 15: Lenksystem
- 16: ESC-System
- 17: Bremsflüssigkeitstank
- 18: 2-Box Schnittstelle

- 100: erste Verfahrensaktion
- 200: zweite Verfahrensaktion
- 300: dritte Verfahrensaktion

- L: *"langes Pedal"*
- N: *"normales Pedal"*

## Patentansprüche

1. Verfahren zum Betreiben eines Bremssystems (1) eines Kraftfahrzeugs (2) zum Bremsen eines Rads (3) des Kraftfahrzeugs (2), aufweisend:
- Erfassen einer Pedalstellung eines Bremspedals (4) des Bremssystems (1) mittels einer Erfassungsvorrichtung (5) des Bremssystems (1), und
- Beaufschlagen einer Radbremse (6) des Bremssystems (1) mit einer Bremsflüssigkeit mittels einer mit dem Bremspedal (4) mechanisch gekoppelten Bremsflüssigkeitsgebervorrichtung (7),
**dadurch gekennzeichnet,**
**dass** mittels einer Steuerungsvorrichtung (8) des Bremssystems (1) eine Zusatzbremsvorrichtung (9) zum Bewirken eines zusätzlichen Bremsens des Rads (3) in Abhängigkeit der erfassten Pedalstellung angesteuert wird, wobei als Zusatzbremsvorrichtung (9) eine ESC-Pumpe (10) angesteuert wird, wobei mittels der ESC-Pumpe (10) die Radbremse (6) mit der Bremsflüssigkeit beaufschlagt wird, wobei die Zusatzbremsvorrichtung (9) unabhängig von der Pedalstellung betätigbar ist.

2. Verfahren nach Anspruch 1,
**dadurch gekennzeichnet,**
**dass** als Zusatzbremsvorrichtung (9) ein Generator (11) zum Bremsen des Rads (3) angesteuert wird.

3. Verfahren nach Anspruch 1 oder 2,
**dadurch gekennzeichnet,**
**dass** als Bremsflüssigkeitsgebervorrichtung (7) eine Bremsflüssigkeitsgebervorrichtung (7) verwendet wird, die einen mit dem Bremspedal (4) mechanisch gekoppelten Tandemhauptzylinder (12) aufweist.

4. Verfahren nach einem der vorangegangenen Ansprüche,
**dadurch gekennzeichnet,**
**dass** mittels der Steuerungsvorrichtung (8) ein durch die Zusatzbremsvorrichtung (9) auf das Bremspedal (4) bewirkte Zusatzkraft durch Ansteuern eines Bremskraftverstärkers (13) zum Bereitstellen einer Kompensationskraft vollständig oder teilweise kompensiert wird.

5. Verfahren nach einem der vorangegangenen Ansprüche,
**dadurch gekennzeichnet,**
**dass** mittels der Erfassungsvorrichtung (5) eine Stellungsveränderungsrate der Pedalstellung erfasst wird, wobei die Steuerungsvorrichtung (8) auf Basis der erfassten Pedalstellung und der erfassten Stellungsveränderungsrate eine Zielpedalstellung ermittelt und die Zusatzbremsvorrichtung (9) in Abhängigkeit der erfassten Zielpedalstellung ansteuert.

6. Verfahren nach einem der vorangegangenen Ansprüche,
**dadurch gekennzeichnet,**
**dass** die Zusatzbremsvorrichtung (9) in Abhängigkeit einer auf einen Fahrer des Kraftfahrzeugs (2) individualisierte Konfigurationsvorgabe angesteuert wird.

7. Bremssystem (1) für ein Kraftfahrzeug (2), aufweisend eine Radbremse (6) zum Bremsen eines Rads (3) des Kraftfahrzeugs (2), ein zwischen mehreren Pedalstellungen verstellbares Bremspedal (4) zur Eingabe einer Bremsvorgabe durch einen Fahrer des Kraftfahrzeugs (2), eine Erfassungsvorrichtung (5) zum Erfassen der Pedalstellung, eine mit dem Bremspedal (4) mechanisch gekoppelte Bremsflüssigkeitsgebervorrichtung (7) zum Beaufschlagen der Radbremse (6) mit einer Bremsflüssigkeit, eine Zusatzbremsvorrichtung (9) zum Bewirken eines zusätzlichen Bremsens des Rads (3) und eine Steuerungsvorrichtung (8) zum Steuern der Zusatzbremsvorrichtung (9),
**dadurch gekennzeichnet,**
**dass** die Steuerungsvorrichtung (8) zum Steuern der Zusatzbremsvorrichtung (9) in Abhängigkeit der erfassten Pedalstellung ausgebildet ist, wobei die Zusatzbremsvorrichtung (9) eine ESC-Pumpe (10) aufweist, mittels welcher die Radbremse (6) mit der Bremsflüssigkeit beaufschlagbar ist, wobei die Zusatzbremsvorrichtung (9) unabhängig von der Pedalstellung betätigbar ist.

8. Bremssystem (1) nach Anspruch 7,
**dadurch gekennzeichnet,**
**dass** das Bremssystem (1) zur Durchführung eines Verfahrens nach einem der Ansprüche 1 bis 6 ausgebildet ist.

9. Kraftfahrzeug (2), aufweisend einen Antriebsstrang (14) zum Antreiben des Kraftfahrzeugs (2) und ein Lenksystem (15) zum Lenken des Kraftfahrzeugs (2),
**dadurch gekennzeichnet,**
**dass** das Kraftfahrzeug (2) ein Bremssystem (1) nach Anspruch 7 oder 8 aufweist.

## Claims

1. Method for operating a brake system (1) of a motor vehicle (2) for braking a wheel (3) of the motor vehicle (2), the method comprising:
- detecting a pedal position of a brake pedal (4) of the brake system (1) by means of a detection device (5) of the brake system (1), and
- applying brake fluid to a wheel brake (6) of the brake system (1) by means of a brake fluid dispensing device (7) mechanically coupled to the brake pedal (4),
**characterized in**
**that,** by means of a control device (8) of the brake system (1), an auxiliary braking device (9) is activated to effect additional braking of the wheel (3) depending on the detected pedal position, an ESC pump (10) being activated as the auxiliary braking device (9), brake fluid being applied to the wheel brake (6) by means of the ESC pump (10), it being possible for the auxiliary braking device (9) to be actuated independently of the pedal position.

2. Method according to claim 1,
**characterized in**
**that,** as an auxiliary braking device (9), a generator (11) is activated to brake the wheel (3).

3. Method according to claim 1 or 2,
**characterized in**
**that,** as a brake fluid dispensing device (7), a brake fluid dispensing device (7) is used which has a tandem master cylinder (12) mechanically coupled to the brake pedal (4).

4. Method according to any of the preceding claims,
**characterized in**
**that,** by means of the control device (8), an additional force exerted on the brake pedal (4) by the auxiliary braking device (9) is fully or partially compensated for by activating a brake booster (13) to provide a compensating force.

5. Method according to any of the preceding claims,
**characterized in**
**that,** by means of the detection device (5), a rate of change of position of the pedal is detected, the control device (8) determining a target pedal position on the basis of the detected pedal position and the detected rate of change of position and activating the auxiliary braking device (9) depending on the detected target pedal position.

6. Method according to any of the preceding claims,
**characterized in**
**that** the auxiliary braking device (9) is activated depending on a configuration setting personalized for a driver of the motor vehicle (2).

7. Brake system (1) for a motor vehicle (2), comprising a wheel brake (6) for braking a wheel (3) of the motor vehicle (2), a brake pedal (4) adjustable between several pedal positions for inputting a brake setting by a driver of the motor vehicle (2), a detection device (5) for detecting the pedal position, a brake fluid dispensing device (7) mechanically coupled to the brake pedal (4) for applying brake fluid to the wheel brake (6), an auxiliary braking device (9) for effecting additional braking of the wheel (3), and a control device (8) for controlling the auxiliary braking device (9),
**characterized in**
**that** the control device (8) is designed for controlling the auxiliary braking device (9) depending on the detected pedal position, the auxiliary braking device (9) having an ESC pump (10) by means of which brake fluid can be applied to the wheel brake (6), it being possible for the auxiliary braking device (9) to be actuated independently of the pedal position.

8. Brake system (1) according to claim 7,
**characterized in**
**that** the brake system (1) is designed to carry out a method according to any of claims 1 to 6.

9. Motor vehicle (2), comprising a drive train (14) for propelling the motor vehicle (2) and a steering system (15) for steering the motor vehicle (2),
**characterized in**
**that** the motor vehicle (2) comprises a brake system (1) according to claim 7 or 8.

## Revendications

1. Procédé permettant de faire fonctionner un système de freinage (1) d'un véhicule automobile (2) pour le freinage d'une roue (3) du véhicule automobile (2), présentant :
- la détection d'une position de pédale d'une pédale de frein (4) du système de freinage (1) au moyen d'un dispositif de détection (5) du système de freinage (1), et
- la sollicitation d'un frein de roue (6) du système de freinage (1) par un liquide de frein au moyen d'un dispositif de transmission de liquide de frein (7) accouplé mécaniquement à la pédale de frein (4),
caractérisé en ce
**qu**'au moyen d'un dispositif de commande (8) du système de freinage (1), un dispositif de freinage supplémentaire (9) est activé pour provoquer un freinage supplémentaire de la roue (3) en fonction de la position de pédale détectée, dans lequel une pompe ESC (10) est activée comme dispositif de freinage supplémentaire (9), dans lequel le frein de roue (6) est sollicité par le liquide de frein au moyen de la pompe ESC (10), dans lequel le dispositif de freinage supplémentaire (9) peut être actionné indépendamment de la position de pédale.

2. Procédé selon la revendication 1,
caractérisé en ce
**qu**'un générateur (11) est activé comme dispositif de freinage supplémentaire (9) pour le freinage de la roue (3).

3. Procédé selon la revendication 1 ou 2,
caractérisé en ce
**qu**'est utilisé comme dispositif de transmission de liquide de frein (7) un dispositif de transmission de liquide de frein (7) qui présente un maître-cylindre tandem (12) accouplé mécaniquement à la pédale de frein (4).

4. Procédé selon l'une des revendications précédentes,
caractérisé en ce
**qu**'au moyen du dispositif de commande (8), une force supplémentaire provoquée par le dispositif de freinage supplémentaire (9) sur la pédale de frein (4) est compensée entièrement ou partiellement par l'activation d'un amplificateur de force de freinage (13) pour la fourniture d'une force de compensation.

5. Procédé selon l'une des revendications précédentes,
caractérisé en ce
**qu**'un taux de variation de position de position de la position de pédale est détecté au moyen du dispositif de détection (5), dans lequel le dispositif de commande (8) détermine une position de pédale cible sur la base de la position de pédale détectée et du taux de variation de position détecté et active le dispositif de freinage supplémentaire (9) en fonction de la position de pédale cible détectée.

6. Procédé selon l'une des revendications précédentes,
**caractérisé en ce**
**que** le dispositif de freinage supplémentaire (9) est activé en fonction d'une consigne de configuration individualisée pour un conducteur du véhicule automobile (2).

7. Système de freinage (1) pour un véhicule automobile (2), présentant un frein de roue (6) pour le freinage d'une roue (3) du véhicule automobile (2), une pédale de frein (4) pouvant être réglée entre plusieurs positions de pédale pour l'entrée d'une consigne de freinage par un conducteur du véhicule automobile (2), un dispositif de détection (5) pour la détection de la position de pédale, un dispositif de transmission de liquide de frein (7) accouplé mécaniquement à la pédale de frein (4) et permettant de solliciter le frein de roue (6) par un liquide de frein, un dispositif de freinage supplémentaire (9) permettant de provoquer un freinage supplémentaire de la roue (3) et un dispositif de commande (8) permettant de commander le dispositif de freinage supplémentaire (9),
**caractérisé en ce**
**que** le dispositif de commande (8) est configuré pour commander le dispositif de freinage supplémentaire (9) en fonction de la position de pédale détectée, dans lequel le dispositif de freinage supplémentaire (9) présente une pompe ESC (10) au moyen de laquelle le frein de roue (6) peut être sollicité par le liquide de frein, dans lequel le dispositif de freinage supplémentaire (9) peut être actionné indépendamment de la position de pédale.

8. Système de freinage (1) selon la revendication 7,
**caractérisé en ce**
**que** le système de freinage (1) est configuré pour l'exécution d'un procédé selon l'une des revendications 1 à 6.

9. Véhicule automobile (2), présentant une chaîne cinématique (14) pour l'entraînement du véhicule automobile (2) et un système de direction (15) pour la direction du véhicule automobile (2),
**caractérisé en ce**
**que** le véhicule automobile (2) présente un système de freinage (1) selon la revendication 7 ou 8.
